# EUROPEAN PATENT SPECIFICATION

(11) **EP 3 115 097 B1**
(45) Date of publication and mention of the grant of the patent: **02.09.2020**
(21) Application number: 15175544.4
(22) Date of filing: 06.07.2015
(51) Int. Cl.: B01D 45/06, B01D 46/00, B01D 50/00

(54) **OIL MIST COLLECTOR**
ÖLNEBELKOLLEKTOR
COLLECTEUR DE BROUILLARD D'HUILE

(43) Date of publication of application: 11.01.2017
(73) Proprietor: Air-O-Filter Environment System, Inc., Taichung City (TW)
(72) Inventor: Lee, Tung-Tsai, Changhua Hsien (TW)
(74) Representative: Lang, Christian

(56) References cited:
- DE-A1- 10 249 785
- DE-U1-202013 100 421
- KR-A- 20090 019 305
- US-A- 3 353 340
- US-A1- 2013 255 501

## Description

### FIELD OF THE INVENTION

The present invention relates to an air purifying apparatus, and more particularly to an oil mist collector which facilitates enhancing flow speed and flow rate of oil mists and reducing air resistance and pressure loss in a filtration process, thus enhancing filtering and recycling effect.

### BACKGROUND OF THE INVENTION

A conventional oil mist filter is mounted on a working machine to filter oil mists, dusts, smokes, and hazes which produce in working process, thus exhausting clean and fresh air.

A conventional oil mist filter device comprising a casing unit, a first filtering unit, a second filtering unit and a ventilation unit is disclosed in document US 2013/255501 A1, wherein the second filtering unit is a hollow cylindrical structure having a closed rear end and an opposite open end communicating with an air guiding orifice.

Another conventional oil mist filter is disclosed in TW Publication No. M436140 and contains a frame, a casing, a filtering unit, a ventilation unit, and a filtration cylinder mounted outside the casing. The frame has a filtering space and a pumping space, and a bottom end of the pumping space is in connection with an oil collection space. The filtering unit is disposed in the filtering space and has an arcuate turbulent mesh, a first filtration mesh, and a second filtration mesh. The ventilation unit has a wind wheel arranged in the pumping space, and a motor is accommodated in an accommodation groove of the casing, such that the wind wheel of the ventilation unit rotates to draw the oil mists into the filtering space from an inlet, and then the oil mists are filtered and purified by the filtering unit and the filtration cylinder to exhaust clean and fresh air. Furthermore, oily substances gathered by the filtering unit are discharged out of an oil orifice on the bottom end of the filtering unit, and greases attaching in the pumping space and the casing are discharged out of the oil orifice via an inclined face on the bottom end of the collection space.

However, the oil mist filter still has following disadvantages:
1. Air flows downwardly along the inclined face of the collection space and then contacts with an inner wall of the casing to flow upwardly further. Thereafter, the air flows to the motor through the casing and then flows into the filtration cylinder from an outlet of the casing for further filtering the oil mists, thus increasing air resistance and pressure loss and reducing filtering and recycling effect.
2. The filtering unit has an arcuate air baffle for guiding the oil mists into the filtering space, and the oil mists are filtered evenly by the first filtration mesh and the second filtration mesh, however, the first filtration mesh and the second filtration mesh are stacked parallelly, the oil mists are partially stopped by the first filtration mesh and the second filtration mesh to reduce flow rate of the oil mists. In order to overcome such a problem, the motor has to rotate at a high speed to enhance the flow rate of the oil mists, so it is broken or is overheat in operation.
3. The oil mist filter does not have a pressure inductor for judging obstruction of the first filtration mesh and the second filtration mesh, so the first filtration mesh and the second filtration mesh cannot be replaced or cleaned on time.

The present invention has arisen to mitigate and/or obviate the aforedescribed disadvantages.

### SUMMARY OF THE INVENTION

An objective of the present invention is to provide an oil mist collector which facilitates enhancing flow speed and flow rate of oil mists and reducing air resistance and pressure loss in a filtration process, thus enhancing filtering and recycling effect.

To obtain the above objective(s), an oil mist collector according to claim 1 is provided by the present invention, which contains: a casing unit, a first filtering unit, a second filtering unit, and a ventilation unit.

The casing unit includes a first air chamber which is provided with an inlet, a second air chamber, an air guiding orifice located above the second air chamber and communicating with an exterior environment, and a first recycling orifice arranged on a bottom end of the casing unit and communicating with the first air chamber.

The first filtering unit is disposed in the first air chamber and communicates with the inlet.

The second filtering unit is fixed above the air guiding orifice and is formed in a hollow cylinder shape, wherein the second filtering unit includes an open rear end, a first lip with a noncircular cross section, a second lip, and a first filtration assembly defined between the first lip and the second lip.

The ventilation unit includes a motor and a rotary fan rotatably connected with the motor and secured in the second air chamber.

Thereby, after starting the motor to drive the rotary fan to rotate, a wind pressure is produced to guide oil mists into the first air chamber, and a part of the oil mists is filtered in the first filtering unit, and the remaining parts of the oil mists are guided to flow into the second air chamber and then are pumped into the second filtering unit via the air guiding orifice for further filtration, thus filtering and recycling the remaining oil mists and exhausting clean and fresh air via the first filtration assembly of the second filtering unit.

Since the air guiding orifice is located above the second air chamber and communicates with the second filtering unit, the remaining parts the oil mists after filtration in the first filtering unit are pumped upwardly into the second filtering unit from the second air chamber smoothly. In other words, a flowing path of the air flow in the casing unit is shortened greatly to reduce the air resistance and the pressure loss, thus causing smooth exhaustion and high recycling to the oil mists.

### BRIEF DESCRIPTION OF THE DRAWINGS

Figure 1 is a perspective view showing the assembly of an oil mist collector according to a first embodiment of the present invention.
Figure 2 is a cross sectional view showing the assembly of the oil mist collector according to the first embodiment of the present invention.
Figure 3 is another cross sectional view showing the assembly of the oil mist collector according to the first embodiment of the present invention.
Figure 4 is a top plan view showing the assembly of a part of the oil mist collector according to the first embodiment of the present invention.
Figure 5 is a perspective view showing the assembly of a first filtering unit of the oil mist collector according to the first embodiment of the present invention.
Figure 6 is a cross sectional view showing the assembly of an oil mist collector according to a second embodiment of the present invention.
Figure 7 is a perspective view showing the assembly of an air baffle of the oil mist collector according to the second embodiment of the present invention.
Figure 8 is an amplified cross sectional view showing a portion of Figure 6 marked by dashed lines.
Figure 9 is a cross sectional view showing the assembly of an oil mist collector according to a third embodiment of the present invention.

### DETAILED DESCRIPTION OF THE PREFERRED EMBODIMENTS

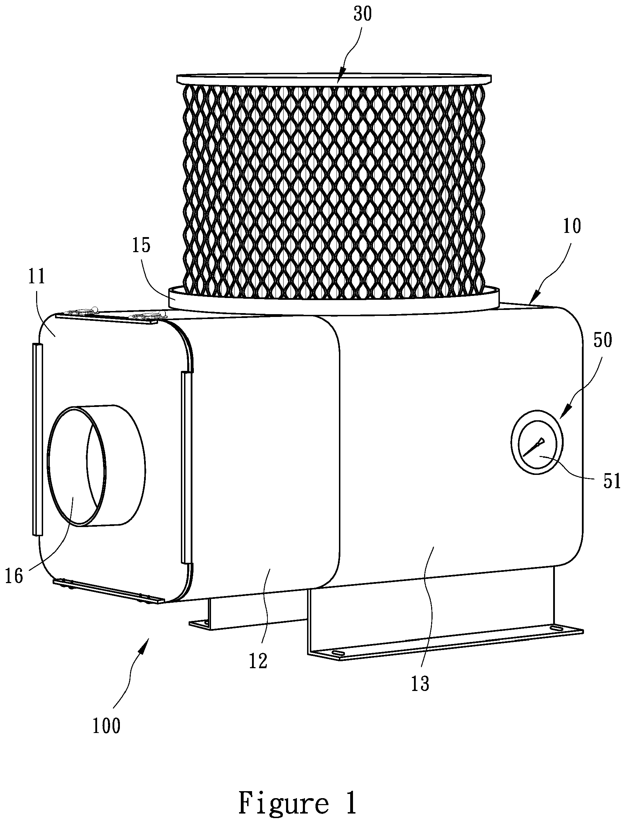

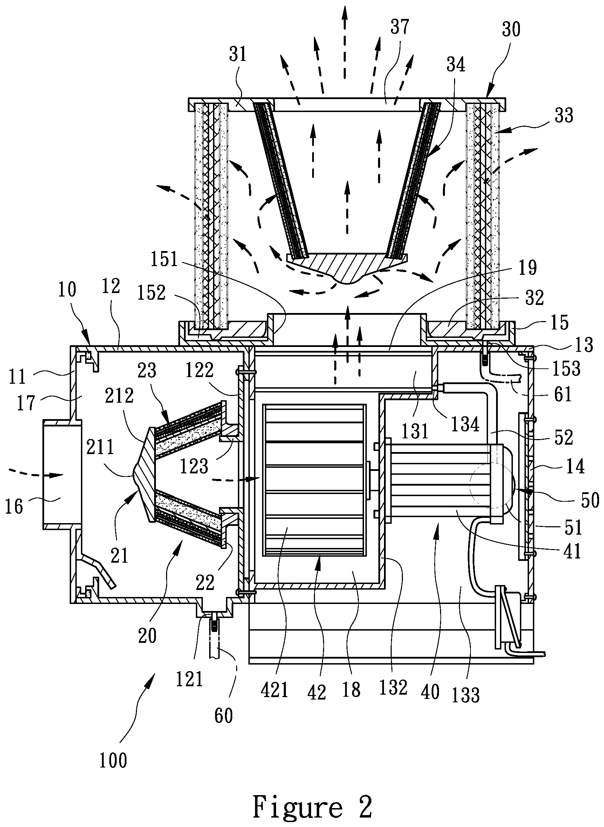

With reference to Figures 1 and 2, an oil mist collector 100 according to a first embodiment of the present invention is fixed on a work table of a machine (not shown). The oil mist collector 100 comprises: a casing unit 10, a first filtering unit 20, a second filtering unit 30, a ventilation unit 40, and a pressure indicator 50.

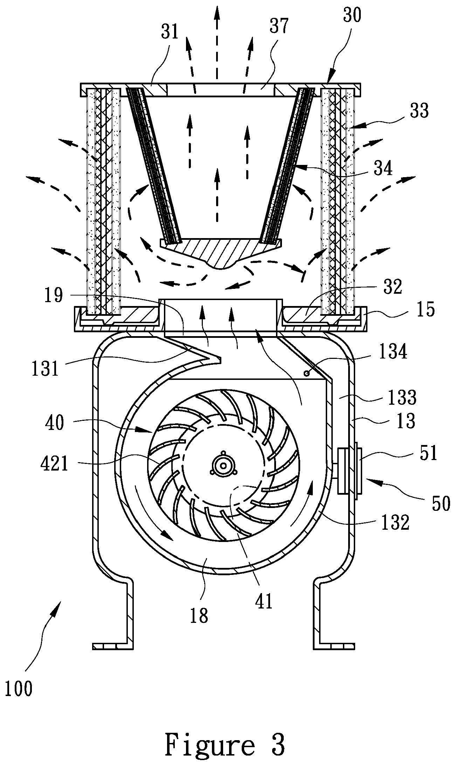

Referring to Figures 2 and 3, the casing unit 10 includes a first cap 11, a first box 12 connected with the first cap 11, a second box 13 proximate to the first box 12, a second cap 14 disposed on a rear end of the second box 13, and a holder 15 mounted on a top end of the second box 13, wherein the first cap 11, the first box 12, and the second box 13 define a hollow interior to accommodate an inlet 16, a first air chamber 17, a second air chamber 18, and an air guiding orifice 19 located above the second air chamber 18 and communicating with an exterior environment. The first cap 11 has the inlet 16 formed on a central portion thereof and is removed to open the first air chamber 17, thus replacing the first filtering unit 20.

The first box 12 has the first air chamber 17 formed therein, a first recycling orifice 121 is arranged on a bottom end thereof and communicates with the first air chamber 17, an air baffle 122 is fixed on a side wall thereof which corresponds to the second air chamber 18, and an air tube 123 extends outwardly from a central portion of the air baffle 122 to connect with the first filtering unit 20.

The second box 13 has the second air chamber 18 formed therein and has the air guiding orifice 19 located above the second air chamber 18, wherein a cross section of the second air chamber 18 is circular. The second box 13 further has a beveled plate 131 located adjacent to the air guiding orifice 19 and obliquely extending downward from the top end of the second box 13 to a top rim of the second air chamber 18 so as to shield a half of air guiding orifice 19. In this embodiment, the second box 13 further has an separation plate 132 arranged on a back side of the second air chamber 18, an accommodation room 133 defined between the separation plate 132 and the second cap 14, and an air drawing orifice 134 formed on the separation plate 132 and communicating with the second air chamber 18.

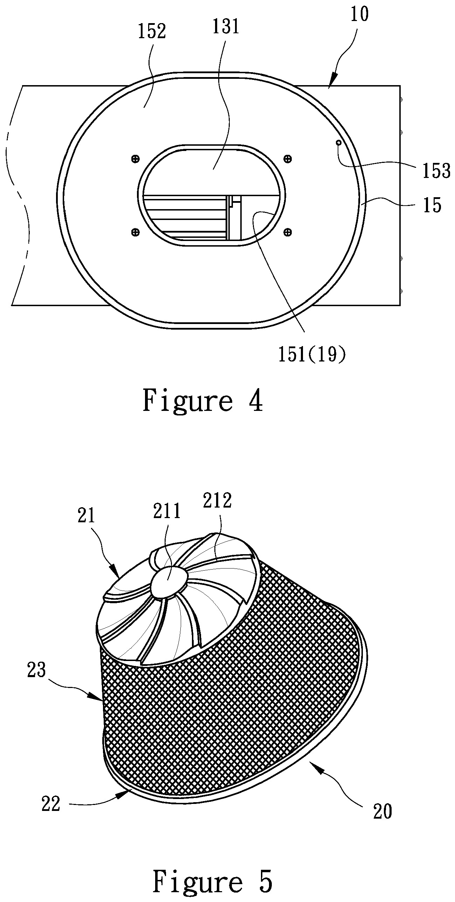

Referring further to Figure 4, a cross section of the holder 15 is elliptical to correspond to that of the second filtering unit 30, and the holder 15 has an oval opening 151 defined on a central position thereof and communicating with the air guiding orifice 19, wherein the holder 15 has a groove 152 concentric with the oval opening 151, and a second recycling orifice 153 arranged on a bottom end of the holder 15 and communicating with the groove 152.

As shown in Figures 2 and 5, the first filtering unit 20 is disposed in the first air chamber 17 and is formed in a hollow cone shape, wherein the first filtering unit 20 includes an open rear end, a third lip 21 formed in an inclined cone shape, and a fourth lip 22 fitted with the air tube 123, wherein an outer diameter of the fourth lip 22 is greater than that of the third lip 21. The first filtering unit 20 further includes a second filtration assembly 23 defined between the third lip 21 and the fourth lip 22. In this embodiment, the third lip 21 has a collecting protrusion 211 arranged on a central position thereof and a plurality of spiral guide ribs 212 radially extending outwardly from the collecting protrusion 211. The fourth lip 22 has a through hole formed thereon to fit the second lip 22 with the air tube 123, such that the first filtering unit 20 is mounted in the first air chamber 17 securely. In addition, the second filtration assembly 23 has an outer mesh made of metal, an air mesh, a deposition mesh, a connection mesh, a rhombus layer mesh, an oil water separating layer, and an inner mesh.

The second filtering unit 30 is fixed on the holder 15 and is formed in a hollow cylinder shape, wherein the second filtering unit 30 includes an open rear end, a first lip 31 with a noncircular cross section, a second lip 32 retained into the groove 152, a first filtration assembly 33 defined between the first lip 31 and the second lip 32, a third filtration assembly 34 surrounded by the first filtration assembly 33 in the second filtering unit 30 and fixed in the second filtering unit 30 and connected with the first lip 31, and an outlet 37 defined on a central position of the first lip 31. In this embodiment, a cross section of the second filtering unit 30 is oval. Due to the first filtration assembly 33 and the third filtration assembly 34 have a similar structure to that of the second filtration assembly 23 of the first filtering unit 20, further remarks are omitted.

The ventilation unit 40 includes a motor 41 mounted in the accommodation room 133, a rotary fan 42 rotatably connected with the motor 41 and secured in the second air chamber 18, wherein the rotary fan 42 is coaxial with the first filtering unit 20 and has plural fan blades 421 equidistantly arranged thereon. In this embodiment, a direction of an inclination angle of the beveled plate 131 is the same as a rotating direction of the rotary fan 42, so when the rotary fan 42 rotates, a wind pressure generated by rotating the rotary fan 42 is guided into the second filtering unit 30 smoothly by ways of the inclination angle of the beveled plate 131, and an air ventilation is not stopped by a back pressure which is produced by rotating the rotary fan 42.

The pressure indicator 50 includes an indicating portion 51 arranged on a front end thereof and includes a drawing tube 52 joined with the air drawing orifice 134 of the second air chamber 18, such that the wind pressure generated by rotating the rotary fan 42 of the ventilation unit 40 is displayed by the indicating portion 51 to sense a flow speed and flow rate of oil mist in the second air chamber 18, thus judging obstruction of the first filtering unit 20 and the second filtering unit 30.

Thereby, after starting the motor 41 to drive the rotary fan 42 to rotate, a centrifugal wind pressure is produced to guide the oil mists, dusts, and waste gases in the factory into the first air chamber 17 via the inlet 16, and the plurality of spiral guide ribs 212 of the third lip 21 of the first filtering unit 20 facilitate revolving air flow in the first air chamber 17 to stop a part of the oil mists and the dusts, and the through hole of the fourth lip 22 facilitates exhausting the waste gases and reducing air resistance and pressure loss, such that a part of the oil mists and the waste gases are filtered by the second filtration assembly 23 of the first filtering unit 20 and then the others of the oil mists flow into the second air chamber 18 via the through hole of the fourth lip 22. Thereafter, the rotary fan 42 pumps the others of the oil mists into the second air chamber 18 via the air guiding orifice 19, such that the air flow is guided evenly and air resistance of the first filtration assembly 33 and the third filtration assembly 34 is reduced by using an oval cross section of the second filtering unit 30. In other words, the second filtering unit 30 enhances 20 % of filtration area more than a conventional filtration cylinder formed in a circle shape. Finally, clean and fresh air is exhausted out of the second filtering unit 30.

In operation of the ventilation unit 40, the oil mists and water drops located in the first air chamber 17 and attaching on the third lip 21 and the second filtration assembly 23 of the first filtering unit 20 fall onto a bottom end of the first air chamber 17, and the others of the oil mists in the second filtering unit 30 flow into the groove 152 of the holder 15, thereafter all oil mists, water drops, and greases in the oil mist collector are exhausted out of the casing unit 10 through the first recycling orifice 121 and the second recycling orifice 153, and then they are collected and recycled by a first pipe 60 and a second pipe 6 1.

Accordingly, the oil mist collector of the present invention has advantages as follows:
1. Since the air guiding orifice is located above the second air chamber and communicates with the second filtering unit 30, the others of the oil mists are pumped upwardly into the second filtering unit 30 from the second air chamber 18 smoothly. In other words, a flowing path of the air flow in the casing unit 10 is shortened greatly to reduce the air resistance and the pressure loss, thus causing smooth exhaustion and high recycling to the oil mists.
2. The first filtering unit 20 is formed in the hollow cone shape and has the open rear end to increase filtration area, and the second lip 22 has the through hole to facilitate exhausting the waste gases and reducing the air resistance and the pressure loss, thus accelerating the flow speed and flow rate of the oil mist and decreasing a load capacity of the motor 41.
3. The wind pressure in the casing unit 10 is displayed by the indicating portion 51 of the pressure indicator 50 to sense the flow speed and the flow rate of the oil mist in the second air chamber 18, thus judging the obstruction of the first filtering unit 20 and the second filtering unit 30 to replace or clean the first filtering unit 20 and the second filtering unit 30.

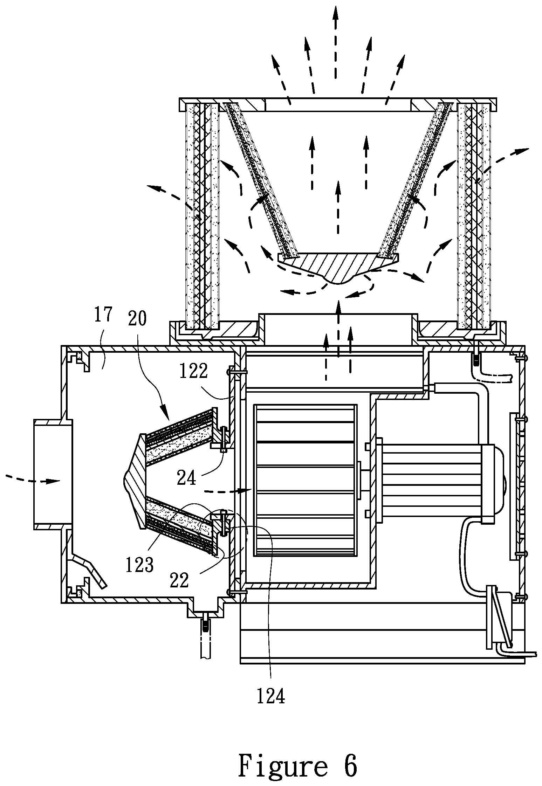

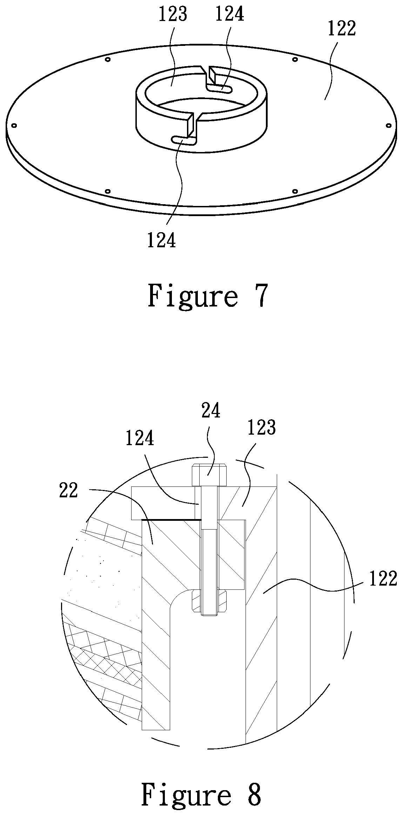

Referring further to Figures 6 to 8, the first filtering unit 20 is disposed in the first air chamber 17 in a rotatable connecting manner according to a second embodiment of the present invention, wherein an air tube 123 has a plurality of L-shaped slots 124 formed on a peripheral wall thereof, and a first filtering unit 20 includes plural locking elements 24 arranged on a fourth lip 22 thereof, wherein each locking element 24 is a screw bolt and its central axis is perpendicular to a center of the fourth lip 22, such that each locking element 24 is rotatably screwed with each L-shaped slot 124, and the fourth lip 22 of the first filtering unit 20 is connected with an air baffle 122 tightly to fix the air tube 123 securely.

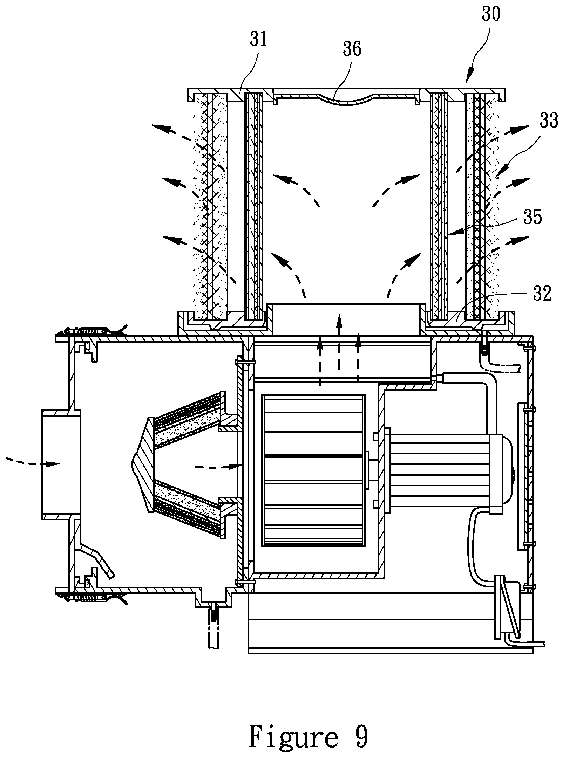

As shown in Figure 9, in a third embodiment, a second filtering unit 30 includes a first filtration assembly 33 and a third filtration assembly 35 surrounded by the first filtration assembly 33 in the second filtering unit 30, wherein the first filtration assembly 33 is parallelly defined between a first lip 31 and a second lip 32, and each of the first filtration assembly 33 and the third filtration assembly 35 has a plurality of filter layers, wherein the first lip 31 is covered by a cover 36, hence the first filtration assembly 33 and the third filtration assembly 35 filter oil mists, dusts, and waste gases.

## Claims

1. An oil mist collector (100) comprising:
a casing unit (10) including a first air chamber (17) provided with an inlet (16), a second air chamber (18), an air guiding orifice (19), and a first recycling orifice (121) arranged on a bottom end thereof and communicating with the first air chamber (17);
a first filtering unit (20) disposed in the first air chamber (17) and communicating with the inlet (16), wherein the first filtering unit (20) further includes an open rear end communicating with the second air chamber (18);
a second filtering unit (30) formed in a hollow cylinder shape and including a first lip (31), a second lip (32), and a first filtration assembly (33) defined between the first lip (31) and the second lip (32); and
a ventilation unit (40) including a motor (41) and a rotary fan (42) rotatably connected with the motor (41);
wherein the air guiding orifice (19) is located above the second air chamber (18), the second filtering unit (30) is fixed above the air guiding orifice (19), and the rotary fan (42) is secured in the second air chamber (18), wherein the air guiding orifice (19) communicates with the second filtering unit (30);
**characterized in that**
the second filtering unit (30) includes an open rear end communicating with an exterior environment and the first lip (31) thereof having a noncircular cross section; and
the casing unit (10) further including a holder (15) mounted on a top end thereof and corresponding to the air guiding orifice (19) to hold the second filtering unit (30), wherein the holder (15) has a groove (152) and a second recycling orifice (153) arranged on a bottom end thereof and communicating with the groove (152).

2. The oil mist collector (100) as claimed in claim 1, wherein the casing unit (10) also includes a first box (12) and a second box (13) proximate to the first box (12), the first air chamber (17) is formed in the first box (12), and the second air chamber (18) is formed in the second box (13).

3. The oil mist collector (100) as claimed in claim 2, wherein the first box (12) of the casing unit (10) has a first cap (11) connected therewith, and the inlet (16) is formed on the first cap (11).

4. The oil mist collector (100) as claimed in claim 2, wherein the second box (13) further has a beveled plate (131) located adjacent to the air guiding orifice (19), and a direction of an inclination angle of the beveled plate (131) is identical to a rotating direction of the rotary fan (42).

5. The oil mist collector (100) as claimed in claim 1, wherein the second air chamber (18) of the casing unit (10) is hollow, and a cross section of the second air chamber (18) is circular.

6. The oil mist collector (100) as claimed in claim 1, wherein the first filtering unit (20) is formed in a hollow cone shape and includes a third lip (21), a fourth lip (22) and a second filtration assembly (23) defined between the third lip (21) and the fourth lip (22).

7. The oil mist collector (100) as claimed in claim 6, wherein the second filtration assembly (23) has an outer mesh made of metal, an air mesh, a deposition mesh, a connection mesh, a rhombus layer mesh, an oil water separating layer, and an inner mesh.

8. The oil mist collector (100) as claimed in claim 6, wherein the third lip (21) is formed in a hollow cone shape and has a collecting protrusion (211) arranged on a central position thereof, the third lip (21) also has a plurality of spiral guide ribs (212) radially extending outwardly from the collecting protrusion (211).

9. The oil mist collector (100) as claimed in claim 6, wherein the casing unit (10) further includes an air baffle (122) located in the first air chamber (17), and the air baffle (122) has an air tube (123) extending outwardly from a central portion thereof and being coaxial with the rotary fan (42), wherein the air tube (123) has a plurality of L-shaped slots (124) formed on a peripheral wall thereof, the first filtering unit (20) further includes plural locking elements (24) arranged on the fourth lip (22) thereof, and each locking element (24) is rotatably screwed with each L-shaped slot (124) so that the first filtering unit (20) is disposed in the first air chamber (17).

10. The oil mist collector (100) as claimed in claim 1, wherein a cross section of the second filtering unit (30) is oval.

11. The oil mist collector (100) as claimed in claim 1, wherein the second filtering unit (30) further includes a third filtration assembly (34) surrounded by the first filtration assembly (33) in the second filtering unit (30), and the third filtration assembly (34) is fixed in the second filtering unit (30) and connected with the first lip (31).

12. The oil mist collector (100) as claimed in claim 1, further comprising a pressure indicator (50), and the pressure indicator (50) including an indicating portion (51) arranged on a front end thereof, the pressure indicator (50) also including a drawing tube (52) joined with the second air chamber (18), such that obstruction of the first filtering unit (20) and the second filtering unit (30) is judged by using the pressure indicator (50).

13. The oil mist collector (100) as claimed in claim 2, wherein the casing unit (10) further includes a second cap (14) disposed on a rear end of the second box (13), and an accommodation room (133) is defined between a separation plate (132) on a back side of the second air chamber (18) and the second cap (14) to accommodate the motor (41).

## Patentansprüche

1. Ölnebelkollektor (100), umfassend:
eine Gehäuseeinheit (10), die eine erste Luftkammer (17), die mit einem Einlass (16) ausgestattet ist, eine zweite Luftkammer (18), eine Luftführungsöffnung (19) und eine erste Recyclingöffnung (121) beinhaltet, die an ihrem unteren Ende angeordnet ist und mit der ersten Luftkammer (17) in Verbindung steht,
eine erste Filtereinheit (20), die in der ersten Luftkammer (17) angeordnet ist und mit dem Einlass (16) in Verbindung steht, wobei die erste Filtereinheit (20) ferner ein offenes hinteres Ende beinhaltet, das mit der zweiten Luftkammer (18) in Verbindung steht,
eine zweite Filtereinheit (30), die in einer hohlen Zylinderform ausgebildet ist und einen ersten Rand (31), einen zweiten Rand (32) und eine erste Filtrationsanordnung (33) beinhaltet, die zwischen dem ersten Rand (31) und dem zweiten Rand (32) definiert ist, und
eine Lüftungseinheit (40), die einen Motor (41) und einen Drehventilator (42) beinhaltet, der drehbar mit dem Motor (41) verbunden ist,
wobei die Luftführungsöffnung (19) über der zweiten Luftkammer (18) angeordnet ist, wobei die zweite Filtereinheit (30) über der Luftführungsöffnung (19) befestigt ist und der Drehventilator (42) in der zweiten Luftkammer (18) befestigt ist, und wobei die Luftführungsöffnung (19) mit der zweiten Filtereinheit (30) in Verbindung steht,
**dadurch gekennzeichnet, dass**
die zweite Filtereinheit (30) ein offenes hinteres Ende beinhaltet, das mit einer äußeren Umgebung und ihrem ersten Rand (31) in Verbindung steht, der einen nicht kreisförmigen Querschnitt aufweist, und dass
die Gehäuseeinheit (10) ferner einen Halter (15) beinhaltet, der an ihrer Oberseite montiert ist und der Luftführungsöffnung (19) entspricht, um die zweite Filtereinheit (30) zu halten, wobei der Halter (15) eine Rille (152) aufweist und eine zweite Recyclingöffnung (153), die an einem unteren Ende davon angeordnet ist und mit der Rille (152) in Verbindung steht.

2. Ölnebelkollektor (100) gemäß Anspruch 1, bei welchem die Gehäuseeinheit (10) auch eine erste Box (12) und eine zweite Box (13) in der Nähe der ersten Box (12) beinhaltet, wobei die erste Luftkammer (17) in der ersten Box (12) ausgebildet ist und die zweite Luftkammer (18) in der zweiten Box (13) angeordnet ist.

3. Ölnebelkollektor (100) gemäß Anspruch 2, bei welchem die erste Box (12) der Gehäuseeinheit (10) eine erste Kappe (11) aufweist, die damit verbunden ist, und der Einlass (16) an der ersten Kappe (11) ausgebildet ist.

4. Ölnebelkollektor (100) gemäß Anspruch 2, bei welchem die zweite Box (13) ferner eine abgeschrägte Platte (131) aufweist, die angrenzend an die Luftführungsöffnung (19) angeordnet ist, und wobei eine Richtung eines Neigungswinkels der abgeschrägten Platte (131) identisch zu einer Drehrichtung des Drehventilators (42) ist.

5. Ölnebelkollektor (100) gemäß Anspruch 1, bei welchem die zweite Luftkammer (18) der Gehäuseeinheit (10) hohl ist und ein Querschnitt der zweiten Luftkammer (18) kreisförmig ist.

6. Ölnebelkollektor (100) gemäß Anspruch 1, bei welchem die erste Filtereinheit (20) in einer hohlen Kegelform ausgebildet ist und einen dritten Rand (21), einen vierten Rand (22) und eine zweite Filtrationsanordnung (23) umfasst, die zwischen dem dritten Rand (21) und dem vierten Rand (22) definiert ist.

7. Ölnebelkollektor (100) gemäß Anspruch 6, bei welchem die zweite Filtrationsanordnung (23) ein äußeres Gitter, das aus Metall hergestellt ist, ein Luftgitter, ein Ablagerungsnetz, ein Verbindungsnetz, ein Rautenschichtnetz, eine Öl-Wasser-Trennschicht und ein inneres Gitter aufweist.

8. Ölnebelkollektor (100) gemäß Anspruch 6, bei welchem der dritte Rand (21) in einer hohlen Kegelform ausgebildet ist und einen Sammelvorsprung (211) aufweist, der an seiner zentralen Position angeordnet ist, wobei der dritte Rand (21) auch eine Mehrzahl an spiralförmigen Führungsrippen (212) aufweist, die sich von dem Sammelvorsprung (211) radial nach außen erstrecken.

9. Ölnebelkollektor (100) gemäß Anspruch 6, bei welchem die Gehäuseeinheit (10) ferner ein Luftleitblech (122) umfasst, das in der ersten Luftkammer (17) angeordnet ist, und wobei das Luftleitblech (122) eine Luftröhre (123) aufweist, die sich von seinem zentralen Abschnitt nach außen erstreckt und koaxial mit dem Drehventilator (42) ist, wobei die Luftröhre (123) eine Mehrzahl an L-förmigen Schlitzen (124) aufweist, die an ihrer Außenwand ausgebildet sind, wobei die erste Filtereinheit (20) ferner mehrere Verriegelungselemente (24) beinhaltet, die an ihrem vierten Rand (22) angeordnet sind und wobei jedes Verriegelungselement (24) drehbar mit jedem L-förmigen Schlitz (124) verschraubt ist, so dass die erste Filtereinheit (20) in der ersten Luftkammer (17) angeordnet ist.

10. Ölnebelkollektor (100) gemäß Anspruch 1, bei welchem ein Querschnitt der zweiten Filtereinheit (30) oval ist.

11. Ölnebelkollektor (100) gemäß Anspruch 1, bei welchem die zweite Filtereinheit (30) ferner eine dritte Filtrationsanordnung (34) umfasst, die durch die erste Filtrationsanordnung (33) in der zweiten Filtereinheit (30) umgeben ist, und wobei die dritte Filtrationsanordnung (34) in der zweiten Filtereinheit (30) befestigt und mit dem ersten Rand (31) verbunden ist.

12. Ölnebelkollektor (100) gemäß Anspruch 1, der ferner eine Druckanzeige (50) umfasst und die Druckanzeige (50) umfasst einen Anzeigeabschnitt (51), der an ihrem vorderen Ende angeordnet ist, wobei die Druckanzeige (50) auch ein Ziehrohr (52) beinhaltet, das mit der zweiten Luftkammer (18) verbunden ist, so dass eine Verstopfung der ersten Filtereinheit (20) und der zweiten Filtereinheit (30) durch den Gebrauch der Druckanzeige (50) beurteilt wird.

13. Ölnebelkollektor (100) gemäß Anspruch 2, bei welchem die Gehäuseeinheit (10) ferner eine zweite Kappe (14) umfasst, die an einem hinteren Ende der zweiten Box (13) angeordnet ist, und wobei ein Aufnahmeraum (133) zwischen einer Trennplatte (132) an einer hinteren Seite der zweiten Luftkammer (18) und der zweiten Kappe (14) definiert ist, um den Motor (41) aufzunehmen.

## Revendications

1. Collecteur de brouillard d'huile (100) comprenant:
une unité de carter (10) incluant une première chambre à air (17) dotée d'une entrée (16), et une seconde chambre à air (8), un orifice de guidage d'air (19), et un premier orifice de recyclage (121) agencé sur une extrémité inférieure de celle-ci et communiquant avec la première chambre à air (17);
une première unité de filtration (20) disposée dans la première chambre à air (17) et communiquant avec l'entrée (16), dans lequel la première unité de filtration (20) inclut en outre une extrémité arrière ouverte communiquant avec la seconde chambre à air (18);
une seconde unité de filtration (30) formée dans une forme de cylindre creux et incluant une première lèvre (31), une deuxième lèvre (32), et un premier ensemble de filtration (33) défini entre la première lèvre (31) et la deuxième lèvre (32); et
une unité de ventilation (40) incluant un moteur (41) et un ventilateur rotatif (42) raccordé de manière à pouvoir tourner au moteur (41);
dans lequel l'orifice de guidage d'air (19) est situé au-dessus de la seconde chambre à air (18), la seconde unité de filtration (30) est fixée au-dessus de l'orifice de guidage d'air (19), et le ventilateur rotatif (42) est fixé dans la seconde chambre à air (18), dans lequel l'orifice de guidage d'air (19) communique avec la seconde unité de filtration (30);
**caractérisé en ce que**
la seconde unité de filtration (30) inclut une extrémité arrière ouverte communiquant avec un environnement extérieur et la première lèvre (31) de celle-ci présentant une section transversale non circulaire; et
l'unité de carter (10) incluant en outre un support (15) monté sur une extrémité supérieure de celle-ci et correspondant à l'orifice de guidage d'air (19) pour maintenir la seconde unité de filtration (30), dans lequel le support (15) présente une rainure (152) et un second orifice de recyclage (153) agencé sur une extrémité inférieure de celui-ci et communiquant avec la rainure (152).

2. Collecteur de brouillard d'huile (100) selon la revendication 1, dans lequel l'unité de carter (10) inclut aussi une première boîte (12) et une seconde boîte (13) à proximité de la première boîte (12), la première chambre à air (17) est formée dans la première boîte (12), et la seconde chambre à air (18) est formée dans la seconde boîte (13).

3. Collecteur de brouillard d'huile (100) selon la revendication 2, dans lequel la première boîte (12) de l'unité de carter (10) présente un premier capuchon (11) raccordé à celle-ci, et l'entrée (16) est formée sur le premier capuchon (11).

4. Collecteur de brouillard d'huile (100) selon la revendication 2, dans lequel la seconde boîte (13) présente en outre une plaque biseautée (131) située de manière adjacente à l'orifice de guidage d'air (19), et une direction d'un angle d'inclinaison de la plaque biseautée (131) est identique à une direction de rotation du ventilateur rotatif (42).

5. Collecteur de brouillard d'huile (100) selon la revendication 1, dans lequel la seconde chambre à air (18) de l'unité de carter (10) est creuse, et une section transversale de la seconde chambre à air (18) est circulaire.

6. Collecteur de brouillard d'huile (100) selon la revendication 1, dans lequel la première unité de filtration (20) est formée dans une forme de cône creux et inclut une troisième lèvre (21), une quatrième lèvre (22) et un deuxième ensemble de filtration (23) défini entre la troisième lèvre (21) et la quatrième lèvre (22).

7. Collecteur de brouillard d'huile (100) selon la revendication 6, dans lequel le deuxième ensemble de filtration (23) présente un maillage extérieur réalisé en métal, un maillage d'air, un maillage de dépôt, un maillage de raccordement, un maillage de couche en losange, une couche de séparation d'eau et d'huile, et un maillage intérieur.

8. Collecteur de brouillard d'huile (100) selon la revendication 6, dans lequel la troisième lèvre (21) est formée dans une forme de cône creux et présente une saillie de collecte (211) agencée sur une position centrale de celle-ci, la troisième lèvre (21) présente aussi une pluralité de nervures de guidage en spirale (212) s'étendant radialement vers l'extérieur depuis la saillie de collecte (211).

9. Collecteur de brouillard d'huile (100) selon la revendication 6, dans lequel l'unité de carter (10) inclut aussi un déflecteur d'air (122) situé dans la première chambre à air (17), et le déflecteur d'air (122) présente un tube d'air (123) s'étendant vers l'extérieur depuis une portion centrale de celui-ci et étant coaxial avec le ventilateur rotatif (42), dans lequel le tube d'air (123) présente une pluralité de fentes en forme de L (124) formées sur une paroi périphérique de celui-ci, la première unité de filtration (20) inclut en outre plusieurs éléments de verrouillage (24) agencés sur la quatrième lèvre (22) de celle-ci, et chaque élément de verrouillage (24) est vissé de manière à pouvoir tourner avec chaque fente en forme de L (124) de sorte que la première unité de filtration (20) soit disposée dans la première chambre à air (17).

10. Collecteur de brouillard d'huile (100) selon la revendication 1, dans lequel une section transversale de la seconde unité de filtration (30) est ovale.

11. Collecteur de brouillard d'huile (100) selon la revendication 1, dans lequel la seconde unité de filtration (30) inclut en outre un troisième ensemble de filtration (34) entouré par le premier ensemble de filtration (33) dans la seconde unité de filtration (30), et le troisième ensemble de filtration (34) est fixé dans la seconde unité de filtration (30) et raccordé à la première lèvre (31).

12. Collecteur de brouillard d'huile (100) selon la revendication 1, comprenant en outre un indicateur de pression (50), et l'indicateur de pression (50) incluant une portion d'indication (51) agencée sur une extrémité avant de celui-ci, l'indicateur de pression (50) incluant aussi un tube de prélèvement (52) joint à la seconde chambre à air (18) de sorte que l'obstruction de la première unité de filtration (20) et de la seconde unité de filtration (30) soit jugée par utilisation de l'indicateur de pression (50).

13. Collecteur de brouillard d'huile (100) selon la revendication 2, dans lequel l'unité de carter (10) inclut en outre un second capuchon (14) disposé sur une extrémité arrière de la seconde boîte (13), et un espace de logement (133) est défini entre une plaque de séparation (132) sur un côté arrière de la seconde chambre à air (18) et le second capuchon (14) pour loger le moteur (41).
